# EUROPÄISCHE PATENTSCHRIFT

(11) **EP 4 294 692 B1**
(45) Veröffentlichungstag und Bekanntmachung des Hinweises auf die Patenterteilung: **17.04.2024**
(21) Anmeldenummer: 23715436.4
(22) Anmeldetag: 23.03.2023
(51) Int. Cl.: B60W 40/08, B60W 50/08, B60W 50/12, B60W 50/14, B60W 30/14, B60K 28/02

(54) **VERFAHREN ZUM BETRIEB EINES FAHRZEUGES**
METHOD FOR OPERATING A VEHICLE
PROCÉDÉ POUR COMMANDER UN VÉHICULE

(30) Priorität: 31.03.2022 DE 102022001116
(43) Veröffentlichungstag der Anmeldung: 27.12.2023
(73) Patentinhaber: Mercedes-Benz Group AG, 70372 Stuttgart (DE)
(72) Erfinder: WIRTZ, Rene, 70199 Stuttgart (DE)
(74) Vertreter: Novagraaf Group
(86) Internationale Anmeldenummer: PCT/EP2023/057445
(87) Internationale Veröffentlichungsnummer: WO 2023/186688

(56) Entgegenhaltungen:
- EP-B1- 2 711 227
- US-A1- 2018 146 898
- US-A1- 2021 024 078
- LEGNER CHRISTOPHER ET AL: "Sweat sensing in the smart wearables era: Towards integrative, multifunctional and body-compliant perspiration analysis", SENSORS AND ACTUATORS A: PHYSICAL, ELSEVIER BV, NL, Bd. 296, 13. Juli 2019 (2019-07-13), Seiten 200-221, XP085794851, ISSN: 0924-4247, DOI: 10.1016/J.SNA.2019.07.020 [gefunden am 2019-07-13]

## Beschreibung

Die Erfindung betrifft ein Verfahren zum Betrieb eines Fahrzeuges, wobei ein Cortisolgehalt im Blut eines Fahrers des Fahrzeuges ermittelt wird.

Aus der EP 2 711 227 B1 ist ein Verfahren zum Anpassen eines Steueralgorithmus, der einen fahrerabhängigen Parameter aufweist, bekannt. Der Steueralgorithmus regelt ein Getriebesystem in einem Fahrzeug. Das Verfahren sieht die Messung einer physischen Kerngröße des Fahrers, eine Bestimmung eines Stresspegels des Fahrers auf Basis der ausgeführten Messung und eine Anpassung des Steueralgorithmus an den bestimmten Stresspegel des Fahrers vor. Weiterhin ist das Verfahren gekennzeichnet durch eine Anpassung des Steueralgorithmus, die eine Erweiterung eines zulässigen Drehzahlbereiches aufweist, bevor ein Gangwechsel erfolgt, wobei diese Erweiterung proportional zum bestimmten Stresspegel des Fahrers ist. Die gemessene physische Kenngröße des Fahrers weist einen Blutcortisolspiegel und eine Menge von abgesondertem Handschweiß auf.

Der Erfindung liegt die Aufgabe zugrunde, ein Verfahren zum Betrieb eines Fahrzeuges anzugeben.

Die Aufgabe wird erfindungsgemäß durch ein Verfahren gelöst, welches die in Anspruch 1 angegebenen Merkmale aufweist.

Vorteilhafte Ausgestaltungen der Erfindung sind Gegenstand der Unteransprüche.

Ein Verfahren zum Betrieb eines Fahrzeuges, wobei ein Cortisolgehalt im Blut des Fahrers ermittelt wird, sieht erfindungsgemäß vor, dass der Cortisolgehalt im Blut des Fahrers anhand eines mittels einer tragbaren Datenverarbeitungseinheit sensorisch erfassten Cortisolgehaltes im Schweiß des Fahrers abgeleitet wird und in Abhängigkeit des abgeleiteten Cortisolgehaltes des Fahrers Einstellungen von Fahrzeugparametern und/oder Fahrzeugfunktionen zur Verringerung des Unfallrisikos angepasst werden.

Durch Anwendung des Verfahrens kann ein Unfallrisiko, insbesondere für einen vergleichsweise jungen Fahrer des Fahrzeuges, verringert werden und dadurch eine Verkehrssicherheit erhöht werden. Vergleichsweise junge Fahranfänger mit einem relativ niedrigen Cortisolgehalt weisen ein deutlich höheres Unfallrisiko auf als Gleichaltrige mit einem relativ hohen Cortisolgehalt im Blut.

Cortisol ist ein Stresshormon im Körper von Säugetieren und somit auch von Menschen. Durch Cortisol wird eine Konzentrations- und Leistungsfähigkeit gesteigert und es schützt den Körper vor Entzündungen. Durch eine Ausschüttung von Cortisol wird der Körper unterstützt, in verhältnismäßig extremen Situationen aufmerksam und leistungsfähig zu bleiben. Daraus kann geschlussfolgert werden, dass eine Aufmerksamkeit und Leistungsfähigkeit eines Fahrers eines Fahrzeuges, insbesondere eines vergleichsweise jungen Fahrers ohne wesentliche Fahrerfahrung, bei einem relativ geringen Cortisolgehalt oder Cortisolspiegel im Blut weniger aufmerksam und leistungsfähig ist. Ein Unfallrisiko für diesen Fahrer kann also dementsprechend hoch sein.

Der Cortisolgehalt im Schweiß kann anhand erfasster Signale der tragbaren Datenverarbeitungseinheit, insbesondere eines sogenannten Schweißtrackers, ermittelt werden. Es handelt sich also um eine nichtinvasive Messung des Cortisolgehaltes im Schweiß des Fahrers. Ein Schweißtracker kann beispielsweise in einen sogenannten Fitnesstracker oder in eine Smartwatch integriert sein. Ein ermittelter Cortisolgehalt im Schweiß und auch im Blut lässt Rückschlüsse auf ein Stresslevel einer die Datenverarbeitungseinheit tragenden Person zu.

Weiterhin wird anhand des abgeleiteten Cortisolgehaltes im Blut des Fahrers und einer ermittelten Fahrerfahrung des Fahrers eine Gefährdungsstufe für ein Unfallrisiko des Fahrers ermittelt. Das heißt, dass bei einem ermittelten vergleichsweise geringen Cortisolgehalt im Blut des Fahrers und vergleichsweise wenig Fahrerfahrung eine Gefährdungsstufe in Bezug auf ein Unfallrisiko verhältnismäßig hoch ist. Wird hingegen ein vergleichsweise hoher Cortisolgehalt ermittelt und der Fahrer weist ein relativ hohes Maß an Fahrerfahrung auf, dann wird angenommen, dass die Gefährdungsstufe vergleichsweise gering ist und somit ein geringes Unfallsrisiko für den Fahrer des Fahrzeuges besteht. Beispielsweise kann die Fahrerfahrung dadurch ermittelt werden, dass ein Geburtsdatum und/oder ein Ausstellungsdatum eines Führerscheines des Fahrers des Fahrzeuges abgefragt werden beziehungsweise wird. Daraufhin kann dem Fahrer des Fahrzeuges die Möglichkeit gegebenen werden, manuell eine entsprechende Eingabe vorzunehmen. Alternativ oder zusätzlich kann veranlasst werden, dass der Fahrer des Fahrzeuges seinen Führerschein relativ zu einer Fahrzeugkamera positionieren muss, so dass geforderte Daten erfasst und somit die Fahrerfahrung des Fahrers abgeleitet werden kann.

Eine Ausführung des Verfahrens sieht vor, dass als Einstellungen von Fahrzeugparametern und/oder von Fahrzeugfunktionen in Abhängigkeit der jeweils ermittelten Gefährdungsstufe eine Höchstgeschwindigkeit für einen weiteren Fahrbetrieb des Fahrzeuges vorgegeben wird, eine maximal mögliche Beschleunigung begrenzt wird, bei Unterschreiten eines Abstandes des Fahrzeuges zu einem vorausfahrenden Fahrzeug, wobei der Abstand größer ist als ein minimaler Sollabstand, ein Warnhinweis in dem Fahrzeug ausgegeben wird, bei einem Verlassen einer momentanen Fahrspur des Fahrzeuges frühzeitig ein Warnhinweis ausgegeben wird und eine Eingriffsgrenze eines Spurhalteassistenten für einen Lenkeingriff abgesenkt wird und/oder eine Wahl eines Sportfahrprogrammes verhindert wird.

Mittels dieser Anpassung der Einstellungen von Fahrzeugparametern und/oder Fahrzeugfunktionen, soll insbesondere vermieden werden, dass der Fahrer bei einer ermittelten vergleichsweise hohen Gefährdungsstufe tatsächlich einen Unfall provoziert oder durch Unaufmerksamkeit in einen Unfall involviert wird. Anhand der Anpassung der Einstellungen wird also ein Unfallrisiko für den Fahrer des Fahrzeuges verringert.

In einer Weiterbildung des Verfahrens wird der Fahrer im Fahrzeug anhand seines Schweißes identifiziert. Hierzu werden zunächst Schweißdaten des Fahrers hinterlegt, so dass der Fahrer durch einen Abgleich zwischen erfassten und hinterlegten Schweißdaten identifiziert werden kann. Durch die Erfassung des Schweißes mittels der tragbaren Datenverarbeitungseinheit und dem Abgleich mit hinterlegten Daten, ist es möglich, den Fahrer automatisch zu identifizieren, ohne dass zur Identifikation eine Eingabe des Fahrers des Fahrzeuges erforderlich ist.

Eine weitere mögliche Ausführung des Verfahrens sieht vor, dass erfasste Schweißdaten des Fahrers zur Auswertung und Verarbeitung an eine fahrzeugseitige Rechnereinheit übertragen werden. Somit liegen dem Fahrzeug die Schweißdaten vor, wodurch der Fahrer identifiziert und sein Cortisolgehalt im Blut hinsichtlich eines Unfallrisikos bestimmt werden kann.

Handelt es sich in einer möglichen Weiterbildung um ein Fahrzeug mit wechselnden Fahrern, so ist in der Rechnereinheit eine Datenbank potentieller Fahrer des Fahrzeuges gespeichert. Insbesondere sind in der Datenbank alle potentiellen Fahrer des Fahrzeuges hinterlegt und können über ihre fahrzeugseitig hinterlegten Schweißdaten und erfassten Schweißdaten identifiziert werden. Zudem kann vor einem Fahrtantritt ein Cortisolgehalt im Schweiß des jeweils potentiellen Fahrers ermittelt werden. In Abhängigkeit der ermittelten Gefährdungsstufe können dann gegebenenfalls dementsprechend Änderungen an den Einstellungen von Fahrzeugparametern und/oder Fahrzeugfunktionen vor einem Fahrtantritt des Fahrzeuges vorgenommen werden, um das Unfallrisiko des Fahrers zu verringern.

In einer möglichen Ausbildung sind in der Datenbank ein Geburtsdatum des jeweiligen potentiellen Fahrers und persönliche Schweißdaten zum Identifizieren des jeweiligen potentiellen Fahrers gespeichert. Insbesondere kann anhand des Geburtsdatums des jeweiligen potentiellen Fahrers des Fahrzeuges die Fahrerfahrung abgeleitet und bei der Ermittlung der Gefährdungsstufe automatisch berücksichtigt werden.

In einer weiteren möglichen Ausbildung des Verfahrens wird der jeweilige potentielle Fahrer mittels eines elektronisch lesbaren Führerscheines bei einer erstmaligen Erfassung seiner Schweißdaten in der Datenbank registriert. Somit ist der Fahrer als potentieller Fahrer des Fahrzeuges hinterlegt und kann anhand seines Schweißes eindeutig identifiziert werden. Zudem kann ein Cortisolgehalt im Blut des Fahrers vom erfassten Cortisolgehalt im Schweiß des Fahrers abgeleitet und eine Gefährdungsstufe für ein Unfallrisiko ermittelt werden. In Abhängigkeit der ermittelten Gefährdungsstufe werden gegebenenfalls Einstellungen von Fahrzeugparametern und/oder Fahrzeugfunktionen, insbesondere die Sicherheit betreffend, angepasst.

In einer möglichen Ausführung kann die Fahrerfahrung des Fahrers anhand eines Ausstellungsdatums des Führerscheines ermittelt werden. Handelt es sich um einen elektronisch lesbaren Führerschein des jeweiligen potentiellen Fahrers des Fahrzeuges, dann kann die Fahrerfahrung des Fahrers anhand eines elektronisch einlesbaren Ausstellungsdatums des Führerscheines automatisch abgeleitet werden.

Darüber hinaus sieht eine Ausführung vor, dass dem jeweiligen Fahrer des Fahrzeuges alle vorgenommenen Änderungen in Bezug auf die Einstellungen der Fahrzeugparameter und/oder Fahrzeugfunktionen sowie ein ermittelter momentaner Cortisolgehalt im Schweiß und/oder Blut des Fahrers auf einer Anzeigeeinheit des Fahrzeuges angezeigt werden. Somit hat der Fahrer einen Überblick über seinen Cortisolgehalt und die damit verbundenen Änderungen der Einstellungen der Fahrzeugparameter und/oder Fahrzeugfunktionen, insbesondere zur Erhöhung seiner und der Sicherheit sich in einer Umgebung des Fahrzeuges befindlichen Verkehrsteilnehmer.

Ausführungsbeispiele der Erfindung werden im Folgenden anhand einer Zeichnung näher erläutert.

Dabei zeigt die:

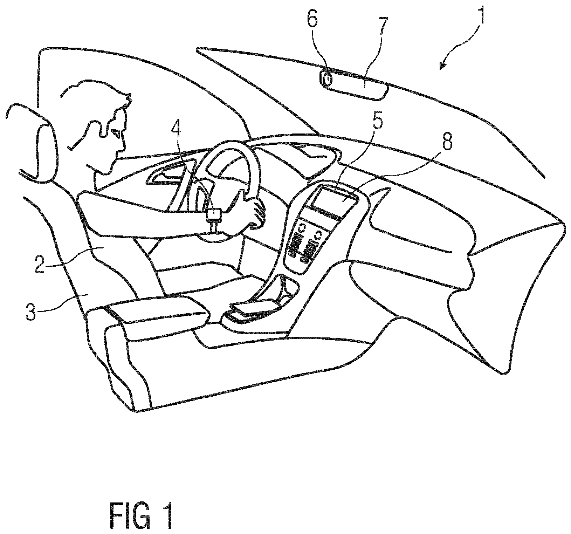

- Fig. 1: schematisch in perspektivscher Ansicht einen Ausschnitt eines Fahrzeuges mit einem Fahrer auf einem Fahrersitz.

Die einzige Figur zeigt eine perspektivische Ansicht eines Ausschnittes eines Fahrzeuges 1 mit einem Fahrer 2 auf einem Fahrersitz 3 des Fahrzeuges 1.

Im Allgemeinen ist bekannt, dass in einer Altersgruppe von 16-Jährigen bis 29-Jährigen ein Verkehrsunfall die häufigste Todesursache ist. Vergleichsweise junge Fahranfänger, die einen relativ niedrigen Cortisolgehalt, also einen relativ niedrigen Cortisolspiegel, im Blut aufweisen, weisen ein deutlich höheres Unfallrisiko auf als Gleichaltrige mit einem relativ hohen Cortisolspiegel.

Cortisol ist ein Stresshormon und wird insbesondere bei Stress von Säugetieren ausgeschüttet und kann im Schweiß nachgewiesen werden. Durch die Ausschüttung von Cortisol wird eine Konzentrations- und Leistungsfähigkeit gesteigert und es schützt den Körper vor Entzündungen. Durch eine Ausschüttung von Cortisol wird der Körper unterstützt, in verhältnismäßig extremen Situationen aufmerksam und leistungsfähig zu bleiben.

Um das Unfallrisiko für einen Fahrer 2 eines Fahrzeuges 1 zu verringern, ist im Folgenden ein Verfahren beschrieben.

Das Verfahren sieht eine nichtinvasive Messung des Cortisolgehaltes im Schweiß eines Fahrers 2 des Fahrzeuges 1 vor. Insbesondere erfolgt die Messung mittels einer tragbaren Datenverarbeitungseinheit 4, die als Schweißtracker bezeichnet werden kann. Beispielsweise ist der Schweißtracker in einen Fitnesstracker oder eine Smartwatch des Fahrers 2 integriert. In einer möglichen Ausführung des Verfahrens kann vorgesehen sein, dass die tragbare Datenverarbeitungseinheit 4 fortlaufend in dem Fahrzeug 1 verbleibt und vor einem Fahrtantritt von einem jeweiligen Fahrer 2 angelegt werden muss.

Anhand des erfassten Cortisolgehaltes im Schweiß des Fahrers 2 kann ein Cortisolgehalt im Blut des Fahrers 2 abgeleitet werden. In Abhängigkeit des erfassten Cortisolgehaltes im Schweiß und/oder des ermittelten Cortisolgehaltes im Blut des Fahrers 2 werden Einstellungen von Fahrzeugparametern und/oder Fahrzeugfunktionen angepasst, um das Unfallrisiko zu verringern.

Erfasste Schweißdaten des Fahrers 2 werden zur Auswertung und Verarbeitung von der Datenverarbeitungseinheit 4 an eine Rechnereinheit 5 des Fahrzeuges 1, also einen sogenannten Fahrzeugcomputer, insbesondere kontaktlos übermittelt, zum Beispiel über eine standardisierte Funkverbindung.

Die Rechnereinheit 5 enthält eine Datenbank mit allen potentiellen Fahrern 2, die befugt sind, das Fahrzeug 1 zu fahren. In der Datenbank sind zusätzlich zur Identifikation des jeweiligen Fahrers 2 persönliche Schweißdaten und auch ein Geburtsdatum des jeweiligen potentiellen Fahrers 2 gespeichert. Beispielsweise ist es erforderlich, dass sich der jeweilige Fahrer 2 in Bezug auf das Fahrzeug 1 registriert, wobei hierzu ein elektronisch lesbarer Führerschein genutzt werden kann. Insbesondere erfolgt die Registrierung des Fahrers 2 bei einer ersten Schweißmessung. Zur Identifikation des jeweiligen Fahrers 2 im Fahrzeug 1 werden die Schweißdaten mittels eines Algorithmus des maschinellen Lernens mit der Datenbank abgeglichen.

Alternativ oder zusätzlich zur Nutzung des elektronisch einlesbaren Führerscheines, um sich fahrzeugseitig zu registrieren, kann eine manuelle Eingabe des Geburtsdatums und/oder eines Ausstellungsdatums des Führerscheines durch den jeweiligen Fahrer 2 erfolgen.

Eine weitere alternative oder zusätzliche Ausführung sieht vor, dass der Führerschein, insbesondere auf diesem vermerkte Angaben, anhand erfasster Bildsignale einer Fahrzeugkamera 6, welche gemäß dem vorliegenden Ausführungsbeispiel in einen Rückspiegel 7 des Fahrzeuges 1 integriert ist, ermittelt werden. Hierzu ist es erforderlich, dass der Fahrer 2 seinen Führerschein vor der Fahrzeugkamera 6 positioniert, so dass die Daten mittels dieser erfasst werden können. Mittels Verfahren einer Bilderkennung werden die erfassten Bildsignale ausgewertet und die Daten, das heißt das Geburtsdatum und/oder das Ausstellungsdatum, erkannt und zur Registrierung des Fahrers 2 in der Datenbank vermerkt.

Anhand der Registrierung ist es möglich, mittels der Datenverarbeitungseinheit 4 erfasste Schweißdaten dem entsprechenden Fahrer 2 und somit auch einem Geburtsdatum sowie einem Alter zuzuordnen.

Insbesondere kann anhand des Alters und einem Ausstellungsdatum des Führerscheines des Fahrers 2 eine Fahrerfahrung abgeleitet werden. Die abgeleitete Fahrerfahrung und der ermittelte Cortisolgehalt, insbesondere im Blut des Fahrers 2, werden zur Ermittlung einer Gefährdungsstufe für den Fahrer 2, insbesondere einen vergleichsweise jungen Fahranfänger, herangezogen. Je niedriger der Cortisolgehalt und geringer die Fahrerfahrung des Fahrers 2 ist, desto höher ist die ihm zugeordnete Gefährdungsstufe.

In Abhängigkeit der ermittelten Gefährdungsstufe, insbesondere in Abhängigkeit einer ermittelten Höhe der Gefährdungsstufe, werden die Einstellungen der Fahrzeugparameter und/oder Fahrzeugfunktionen angepasst.

Insbesondere wird in Abhängigkeit der ermittelten Gefährdungsstufe eine maximal möglich zu fahrende Höchstgeschwindigkeit für einen Fahrbetrieb des Fahrzeuges 1 vorgegeben. Insbesondere ist hierzu vorgesehen, dass je höher die Gefährdungsstufe ist, desto früher wird ein Antriebsstrang des Fahrzeuges 1 bezüglich der Höchstgeschwindigkeit geregelt.

Bei einer ermittelten höheren Gefährdungsstufe wird eine maximal mögliche Beschleunigung des Fahrzeuges 1 begrenzt. Eine Möglichkeit einer Durchführung eines sogenannten Kickdown-Starts bei Fahrtantritt des Fahrzeuges 1 wird ab einer vorgegebenen Gefährdungsstufe gänzlich unterbunden.

In Bezug auf eine Nutzung einer geschwindigkeitsabhängigen Abstandsregelung des Fahrzeuges 1 ist vorgesehen, dass bei ermittelter höherer Gefährdungsstufe ein Warnhinweis an den Fahrer 2 ausgegeben wird, wenn dieser einen vorgegebenen Abstand zu einem vorausfahrenden Fahrzeug unterschreitet. Dabei ist dieser vorgegebene Abstand größer als ein minimaler Sollabstand, das heißt insbesondere ein einer Fahrgeschwindigkeit des Fahrzeuges 1 angepasster Sicherheitsabstand. Der Warnhinweis wird also ausgegeben, wenn sich das Fahrzeug 1 dem vorausfahrenden Fahrzeug nähert, so dass ein Auffahren des Fahrzeuges 1 auf das vorausfahrende Fahrzeug weitestgehend vermieden wird.

Verfügt das Fahrzeug 1 über einen Spurhalteassistenten, dann wird bei ermittelter höherer Gefährdungsstufe bereits bei einem vergleichsweise frühzeitigen Verlassen einer momentanen Fahrspur des Fahrzeuges 1 ein Warnhinweis ausgegeben. Zudem wird eine Eingriffsgrenze des Spurhalteassistenten abgesenkt, bei welcher ein automatischer Lenkeingriff zur Positionierung des Fahrzeuges 1 in Bezug auf seine Fahrspur erfolgt.

Beispielsweise kann bei einer ermittelten höheren Gefährdungsstufe des momentanen Fahrers 2 des Fahrzeuges 1 vor weiteren Fahrzeugen, die sich auf einer Fahrspur befinden, auf welche das Fahrzeug 1 beabsichtigt, einzuscheren, gewarnt werden, auch wenn diese vergleichsweise weit entfernt von dem Fahrzeug 1 sind. Auch kann eine vorausschauende Geschwindigkeitsregulierung bei ermittelter höherer Gefährdungsstufe stärker erfolgen, insbesondere wenn aufgrund von Kartendaten ermittelt wird, dass dem Fahrzeug 1 Kurven, Kreuzungen und/oder Kreisverkehre vorausliegen.

Denkbar ist auch, dass eine Empfindlichkeit eines Aufmerksamkeitsassistenten des Fahrzeuges 1 in Abhängigkeit von der Gefährdungsstufe erhöht wird, so dass schon bei vergleichsweise geringen Anzeichen einer Ermüdung ein durch einen relativ geringen Cortisolgehalt im Schweiß und im Blut des gefährdeten Fahrers 2 gewarnt wird.

Des Weiteren sieht das Verfahren vor, dass im Fall, dass dem Fahrer 2 eine Auswahl eines Fahrprogrammes zur Verfügung steht, die möglich Auswahl eines Sportfahrprogrammes verhindert wird.

Alle vorgenommenen Änderungen in Bezug auf die Einstellungen der Fahrzeugparameter und/oder Fahrzeugfunktionen werden dem Fahrer 2 des Fahrzeuges 1 auf einer Anzeigeeinheit 8 angezeigt.

In einer möglichen Ausführung des Verfahrens ist es möglich, dass eine Wegfahrsperre in das Fahrzeug 1 integriert ist. Die Wegfahrsperre kann beispielsweise von Eltern des Fahrers 2, einer Fahrzeugvermietung, einem Verwalter eines Firmenfuhrparkes und/oder über einen Fernzugriff durch eine Versicherung aktiviert werden. Dazu ist vorgesehen, dass sich eine Antriebseinheit des Fahrzeuges 1 nur einschalten lässt, wenn der Fahrer 2 des Fahrzeuges 1 die tragbare Datenverarbeitungseinheit 4 trägt. Zum Beispiel ist die tragbare Datenverarbeitungseinheit 4 diesem Fahrzeug 1 zugeordnet, verbleibt in diesem und muss von dem jeweiligen Fahrer 2, der befugt ist, das Fahrzeug 1 zu fahren, vor Aufnahme eines Fahrbetriebes angelegt werden.

Alternativ dazu, dass sich die Antriebseinheit des Fahrzeuges 1 nur bei angelegter Datenverarbeitungseinheit 4 einschalten lässt, ist vorgesehen, dass das Fahrzeug 1 bei nicht angelegter oder fehlerhafter Datenverarbeitungseinheit 4 nur in einer maximalen Gefährdungsstufe von dem Fahrer 2 betrieben werden kann. So kann das Fahrzeug 1 bewegt werden, auch wenn die Datenverarbeitungseinheit 4 nicht oder fehlerhaft funktioniert.

## Patentansprüche

1. Verfahren zum Betrieb eines Fahrzeuges (1), wobei ein Cortisolgehalt im Blut eines Fahrers (2) des Fahrzeuges (1) ermittelt wird,
- in Abhängigkeit des ermittelten Cortisolgehaltes des Fahrers (2) Einstellungen von Fahrzeugparametern und/oder Fahrzeugfunktionen zur Verringerung des Unfallrisikos angepasst werden,
**dadurch gekennzeichnet, dass**
- der Cortisolgehalt im Blut des Fahrers (2) anhand eines mittels einer tragbaren Datenverarbeitungseinheit (4) sensorisch erfassten Cortisolgehaltes im Schweiß des Fahrers (2) abgeleitet wird und
- anhand des abgeleiteten Cortisolgehaltes im Blut des Fahrers (2) und einer ermittelten Fahrerfahrung des Fahrers (2) eine Gefährdungsstufe für ein Unfallrisiko des Fahrers (2) ermittelt wird.

2. Verfahren nach Anspruch 1,
**dadurch gekennzeichnet, dass**
als Einstellungen von Fahrzeugparametern und/oder von Fahrzeugfunktionen in Abhängigkeit der jeweils ermittelten Gefährdungsstufe
- eine Höchstgeschwindigkeit für einen weiteren Fahrbetrieb des Fahrzeuges (1) vorgegeben wird,
- eine maximal mögliche Beschleunigung des Fahrzeuges (1) begrenzt wird,
- bei Unterschreiten eines Abstandes des Fahrzeuges (1) zu einem vorausfahrenden Fahrzeug, wobei der Abstand größer ist als ein minimaler Sollabstand, ein Warnhinweis in dem Fahrzeug (1) ausgegeben wird,
- bei einem Verlassen einer momentanen Fahrspur des Fahrzeuges (1) frühzeitig ein Warnhinweis ausgegeben wird und eine Eingriffsgrenze eines Spurhalteassistenten für einen Lenkeingriff abgesenkt wird und/oder
- eine Wahl eines Sportfahrprogrammes verhindert wird.

3. Verfahren nach Anspruch 1 oder 2,
**dadurch gekennzeichnet, dass**
der Fahrer (2) im Fahrzeug (1) anhand seines Schweißes identifiziert wird.

4. Verfahren nach einem der vorhergehenden Ansprüche,
**dadurch gekennzeichnet, dass**
erfasste Schweißdaten des Fahrers (1) zur Auswertung und Verarbeitung an eine fahrzeugseitige Rechnereinheit (5) übertragen werden.

5. Verfahren nach Anspruch 4,
**dadurch gekennzeichnet, dass**
in der Rechnereinheit (5) eine Datenbank potentieller Fahrer (2) des Fahrzeuges (1) gespeichert ist.

6. Verfahren nach Anspruch 5,
**dadurch gekennzeichnet, dass**
in der Datenbank ein Geburtsdatum des jeweiligen potentiellen Fahrers (2) und persönliche Schweißdaten zum Identifizieren des jeweiligen potentiellen Fahrers (2) gespeichert sind.

7. Verfahren nach Anspruch 5 oder 6,
**dadurch gekennzeichnet, dass**
der jeweilige potentielle Fahrer (2) mittels eines elektronisch lesbaren Führerscheines bei einer erstmaligen Erfassung seiner Schweißdaten in der Datenbank registriert wird.

8. Verfahren nach Anspruch 7,
**dadurch gekennzeichnet, dass**
die Fahrerfahrung des Fahrers (2) anhand eines Ausstellungsdatums des Führerscheines ermittelt wird.

9. Verfahren nach einem der vorhergehenden Ansprüche,
**dadurch gekennzeichnet, dass**
dem jeweiligen Fahrer (2) des Fahrzeuges (1) alle vorgenommenen Änderungen in Bezug auf die Einstellungen der Fahrzeugparameter und/oder Fahrzeugfunktionen sowie ein ermittelter momentaner Cortisolgehalt im Schweiß und/oder Blut des Fahrers (2) auf einer Anzeigeeinheit (8) des Fahrzeuges (1) angezeigt werden.

## Claims

1. Method for operating a vehicle (1), wherein a cortisol content in the blood of a driver (2) of the vehicle (1) is determined,
- depending on the determined cortisol content of the driver (2), settings of vehicle parameters and/or vehicle functions are adapted in order to reduce the risk of accidents,
**characterized in that**
- the cortisol content in the blood of the driver (2) is derived on the basis of the cortisol content, detected by sensors by means of a portable data processing unit (4), in the sweat of the driver (2), and
- a hazard level for an accident risk of the driver (2) is determined on the basis of the derived cortisol content in the blood of the driver (2) and a determined level of driving experience of the driver (2).

2. Method according to claim 1,
**characterized in that,**
as settings of vehicle parameters and/or vehicle functions, depending on the hazard level determined in each case,
- a maximum speed is specified for a further driving operation of the vehicle (1),
- a maximum possible acceleration of the vehicle (1) is limited,
- when a distance between the vehicle (1) and a vehicle traveling in front is not met, the distance being greater than a minimum target distance, a warning message is output in the vehicle (1),
- when the vehicle (1) leaves a current lane early, a warning message is output and an intervention limit of a lane departure warning system for a steering intervention is lowered and/or
- selection of a sports driving mode is prevented.

3. Method according to claim 1 or 2,
**characterized in that**
the driver (2) is identified in the vehicle (1) on the basis of the sweat of the driver.

4. Method according to any of the preceding claims,
**characterized in that**
detected sweat data of the driver (1) are transmitted to a vehicle computer unit (5) for evaluation and processing.

5. Method according to claim 4,
**characterized in that**
a database of potential drivers (2) of the vehicle (1) is stored in the computer unit (5).

6. Method according to claim 5,
**characterized in that**
a date of birth of the relevant potential driver (2) and personal sweat data for identifying the relevant potential driver (2) are stored in the database.

7. Method according to claim 5 or 6,
**characterized in that**
the relevant potential driver (2) is registered in the database by means of an electronically readable driver's license during the first detection of the sweat data of the driver.

8. Method according to claim 7,
**characterized in that**
the level of driving experience of the driver (2) is determined on the basis of an issue date of the driver's license.

9. Method according to any of the preceding claims,
**characterized in that**
all changes made in relation to the settings of the vehicle parameters and/or vehicle functions as well as a determined current cortisol content in the sweat and/or blood of the driver (2) are shown to the relevant driver (2) of the vehicle (1) on a display unit (8) of the vehicle (1).

## Revendications

1. Procédé pour faire fonctionner un véhicule (1), dans lequel il est déterminé une teneur en cortisol dans le sang d'un conducteur (2) du véhicule (1),
- en fonction de la teneur en cortisol déterminée chez le conducteur (2), des réglages de paramètres du véhicule et/ou de fonctions du véhicule sont ajustés pour réduire le risque d'accident,
**caractérisé en ce que**
- la teneur en cortisol dans le sang du conducteur (2) est obtenue à partir d'une teneur en cortisol dans la sueur du conducteur (2), laquelle teneur en cortisol est détectée par un capteur à l'aide d'une unité de traitement de données (4) portable et
- à partir de la teneur en cortisol obtenue dans le sang du conducteur (2) et d'une expérience de conduite déterminée du conducteur (2), il est déterminé un niveau de danger de risque d'accident du conducteur (2).

2. Procédé selon la revendication 1,
**caractérisé en ce que**
comme réglages de paramètres du véhicule et/ou de fonctions du véhicule en fonction du niveau de danger déterminé respectivement
- une vitesse maximale est prédéfinie pour un mode supplémentaire de conduite du véhicule (1),
- une accélération maximale possible du véhicule (1) est limitée,
- en cas de passage au-dessous d'une distance du véhicule (1) par rapport à un véhicule précédent, la distance étant supérieure à une distance de consigne minimale, un avertissement est émis dans le véhicule (1),
- en cas d'abandon d'une trajectoire momentanée par le véhicule (1), un avertissement est émis de manière précoce et une limite d'intervention d'un système d'aide au maintien de la trajectoire est réduite pour une intervention sur le volant et/ou
- un choix d'un programme de conduite sportive est empêché.

3. Procédé selon la revendication 1 ou 2,
**caractérisé en ce que**
le conducteur (2) dans le véhicule (1) est identifié à partir de sa sueur.

4. Procédé selon l'une des revendications précédentes,
**caractérisé en ce que**
des données de sueur détectées du conducteur (1) sont transmises à une unité de calcul (5) embarquée pour évaluation et traitement.

5. Procédé selon la revendication 4,
**caractérisé en ce que**
dans l'unité de calcul (5), une base de données de potentiels conducteurs (2) du véhicule (1) est sauvegardée.

6. Procédé selon la revendication 5,
**caractérisé en ce que**
dans la base de données, une date de naissance du conducteur (2) potentiel respectif et des données de sueur personnelles sont sauvegardées pour l'identification du conducteur (2) potentiel respectif.

7. Procédé selon la revendication 5 ou 6,
**caractérisé en ce que**
le conducteur (2) potentiel respectif est enregistré dans la base de données à l'aide d'un permis de conduire lisible électroniquement lors d'une première détection de ses données de sueur.

8. Procédé selon la revendication 7,
**caractérisé en ce que**
l'expérience de conduite du conducteur (2) est déterminée à partir d'une date de délivrance du permis de conduire.

9. Procédé selon l'une des revendications précédentes,
**caractérisé en ce que**
toutes les modifications effectuées en rapport avec les réglages des paramètres du véhicule et/ou des fonctions du véhicule ainsi qu'une teneur en cortisol momentanée déterminée dans la sueur et/ou le sang du conducteur (2) sont affichées au conducteur (2) respectif du véhicule (1) sur une unité d'affichage (8) du véhicule (1).
